# EUROPEAN PATENT SPECIFICATION

(11) **EP 2 518 821 B1**
(45) Date of publication and mention of the grant of the patent: **21.12.2016**
(21) Application number: 12166121.9
(22) Date of filing: 30.04.2012
(51) Int. Cl.: H01Q 3/20, H01Q 19/17, H01Q 1/12, H01Q 1/28, H01Q 19/13, H01Q 25/00

(54) **Architecture and method for optimal tracking of multiple broadband satellite terminals**
Architektur und Verfahren zur optimalen Verfolgung von mehreren Breitband-Satellitenendgeräten
Architecture et procédé de suivi optimal de plusieurs terminaux par satellite à large bande

(30) Priority: 28.04.2011 US 201161457599 P
(43) Date of publication of application: 31.10.2012
(73) Proprietor: MacDonald, Dettwiler and Associates Corporation, Ste-Anne-de-Bellevue, QC H9X 3R2 (CA)
(72) Inventor: Cherkaoui, Jafaar, Dollard-Des-Ormeau, Québec H9A 1M4 (CA); Takats, Peter, Baie D'Urfe, Québec H9X 3V4 (CA); Taylor, Stuart, Westmount, Québec H3Z 1S6 (CA); Garland, Peter, Beaconsfield, Québec H9W 2H5 (CA); Pozzebon, Luigi, De Lorraine, Québec J6Z 4M8 (CA)
(74) Representative: Patentanwaltskanzlei Matschnig & Forsthuber OG

(56) References cited:
- US-A1- 2004 189 538
- US-A1- 2007 281 612
- US-A1- 2010 321 263
- US-B1- 6 895 217

## Description

### FIELD OF THE INVENTION

The present invention relates to the field of antenna systems and satellite applications, and is more particularly concerned with an architecture for simultaneous optimal tracking of multiple broadband satellite terminals in support of in theatre operations and rapid deployment applications, and methods in relation therewith.

### BACKGROUND OF THE INVENTION

It is well known in the art to use communication satellites with large and shaped beam coverage antenna systems, as described in different patent related documents such as US Patent No. 5,754,138 granted to Turcotte et al., US Patent No. 5,856,804 granted to Turcotte et al., US Patent No. 6,684,071 granted to Molnar et al., US Patent No. 6,895,217 granted to Chang et al., US Patent Publication No. US 2010/0302971 A1 of Walker et al.

These antennas typically have multiple beams to cover a specific region on the earth surface and require a relatively large reflector as well as a low communication bit rate to ensure a good performance, also considering interference mitigation between adjacent beams. In addition, these antennas are also typically static (fixed on the spacecraft or satellite), and, depending on the communication RF (Radio-Frequency) frequency band, use either a relatively large antenna aperture (up to about twenty meters (20 m)) for low frequencies such as L-band, or a plurality of smaller antenna apertures (in the order of about one and half meter (1.5 m)) for high frequencies such as Ku-band and Ka-band.

Furthermore, the covered region on the earth surface is so large, the United States of America for example, that the communication traffic is highly variable from beam to beam, thus leading to only a few beams having most of the traffic. Such operation conditions force the overall design of these antenna systems to be complex when they could have been much simpler and less expensive if designed only for those few high traffic beams.

Accordingly, these antenna systems require a significant amount of hardware on the spacecraft, including tens of feeds and corresponding waveguides, which leads to relatively long development, performed in parallel and along with the overall design of the spacecraft, the length of which depends on the specific mission and/or operations thereof. In view of their hardware complexity, such antenna systems are not suitable for applications that in other respects can be supported by a hosted payload configuration. Hosted Payloads are a relatively new trend in the satellite industry that requires a, typically rapidly customizable, design to fit the available accommodation on the host satellite.

In view of the complexities of these wide area coverage systems, there is a need for an improved architecture featuring optimal tracking of multiple broadband satellite terminals to support of in theatre and rapid deployment applications, combined with associated design methods relevant to a small or hosted payload.

### SUMMARY OF THE INVENTION

It is therefore a general object of the present invention to provide an improved architecture for optimal tracking of multiple broadband satellite terminals in support of in theatre and rapid deployment applications, and methods in relation therewith.

An advantage of the present invention is that the architecture is capable of relatively high bit rate communication to the individual terminals with a substantially broadband RF signal frequency range.

Another advantage of the present invention is that the architecture requires a single relatively small antenna reflector for the in theatre user coverage.

A further advantage of the present invention is that the antenna reflector of the communication architecture is steerable in order to select the desired coverage and position of the theatre on the ground surface. This is mandatory for emergency applications or operations that require to redirect the antenna to the theatre of operation over a region dealing with a natural disaster or a political, instability situation or the like. This effectively creates coverage on demand.

Still another advantage of the present invention is that the communication architecture is particularly well adapted to a hosted payload, permitting rapid deployment that is especially well suited for different types of applications or operations (requiring relatively short lead design and implementation time).

Yet another advantage of the present invention is that the communication architecture is well suited for coverage regions of non-uniform traffic, with the satellite coverage capable of being positioned only over high traffic zones if desired, and occasionally over other regions.

Still a further advantage of the present invention is that the communication architecture can support different types of carrier access scheme, whether Time Division Multiple Access (TDMA), Frequency Division Multiple Access (FDMA), Code Division Multiple Access (CDMA) or some combination thereof, and to different types of networking connections, whether star or mesh.

Yet a further advantage of the present invention is that the communication architecture, when having its signal beams generated using an agile beam forming technology, allows for cancellation of traffic jamming and interference signals for enhanced terminal communication and tracking, allows the whole of the available user frequency band is available over the complete coverage theatre area with the maximum number of beams being proportional to the availability of capacity in the system, and eliminates the frequency handover between beam clusters since each moving ground target terminal is tracked by a same beam over the entire operational area.

According to the present invention defined in claims 1 and 9 there is provided an architecture and a method for optimal tracking of multiple moving broadband satellite terminal in a theatre area and in support of rapid deployment applications.

### BRIEF DESCRIPTION OF THE DRAWINGS

Further aspects and advantages of the present invention will become better understood with reference to the description in association with the following Figures, in which similar references used in different Figures denote similar components, wherein:
**Figure 1** **is** a schematic diagram of an embodiment of an RF communication architecture for simultaneous optimal tracking of multiple broadband satellite terminals in support of in theatre operations and rapid deployment applications, in accordance with the present invention; and
**Figure 2** is a flowchart diagram of an embodiment of a method of an RF communication architecture for simultaneous optimal tracking of multiple broadband satellite terminals in support of in theatre operations and rapid deployment applications, in accordance with the present invention.

### DETAILED DESCRIPTION OF THE INVENTION

With reference to the annexed drawings the preferred embodiment of the present invention will be herein described for indicative purpose and by no means as of limitation.

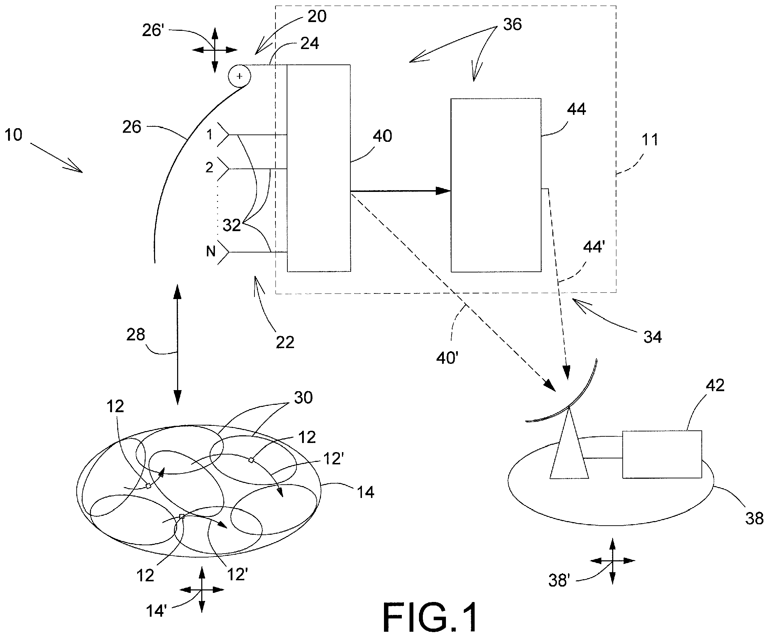

Referring to Figure 1, there is shown a schematic diagram of an embodiment 10 of an RF communication architecture for optimal tracking of multiple moving (as depicted by arrows 12') broadband satellite terminals 12 in support of in theatre 14 operations and rapid deployment applications, in accordance with the present invention.

The architecture 10 includes a spacecraft antenna system 20 having a feed array 22 fixedly mounted on an antenna structure 24 of a spacecraft 11 or the like and operably connected to a reflector 26 movably, as depicted by arrow 26', mounted on the antenna structure 24 for transmitting and receiving at least one electromagnetic signal 28 to and from the movable (as depicted by arrows 14') theatre 14 of operation defined on a ground surface (the Earth surface - not shown). The feed array 22, including N feeds 32, and typically seven (7), generates a plurality of corresponding element beams 30 substantially adjacent from one another within the theater 14 for the tracking of each electromagnetic signal(s) 28 corresponding to a respective satellite terminal 12. The formed beams 30, or ground spots, clusters or cells, are typically slightly overlapping one another, although they could be also spaced from one another without departing from the scope of the present invention, and are typically generated using an agile beam forming technology 34 that also provides for the traffic jamming /interference cancellation around the terminals 12 being tracked. A signal feeder link assembly 36 connects to the feed array 22 for communication of the electromagnetic signal(s) 28 of the signal beams 30 to a ground gateway 38 that could also be mobile (as depicted by arrow 38') on the ground surface.

As seen in Figure 1, each satellite terminal 12, that could be fixed or mobile on the ground surface, or nearby (as a flying vehicle or aircraft), may cross over more than one beam 30 when moving, or even move in-between two adjacent beams, without compromising RF communication therewith. The quantity of terminals 12 that can be simultaneously tracked typically depends on the frequency bandwidth of the antenna system 20 and the carrier per user, the larger the bandwidth the larger the number of simultaneous live terminals.

The signal feeder link assembly 36 typically includes a multiple uplink signal acquisition 40 connected to the feed array 22 and communicating with the ground based gateway 38 via a gateway beam, as represented by arrow 40', where extensive agile ground based beam forming (GBBF) 42 of the agile beam forming technology 34 is performed for the optimized link performance for the multiple moving terminals 12, along with jamming /interference signal cancellation for enhanced performance of the communication architecture 10.

With the agile beam forming technology, each signal beam 30 is typically generated in such a way to be generally centered over a corresponding satellite terminal 12.

Optionally, whenever required depending on the type of operation and/or application, a portion of the beam forming can be performed on-board of the spacecraft (or satellite) by the signal feeder link assembly 36 via an agile on-board beam forming (OBBF) 44 connected to the multiple uplink signal acquisition 40 and communicating with the ground based gateway 38 as a link for hybrid OBBF and GBBF gateway beam, as represented by arrow 44'. This hybrid OBBF and GBBF increases the capabilities of the present communication architecture 10 towards the networking connection, whether star or mesh, and/or the type of carrier multiple access scheme, whether TDMA, FDMA, CDMA or some combination thereof.

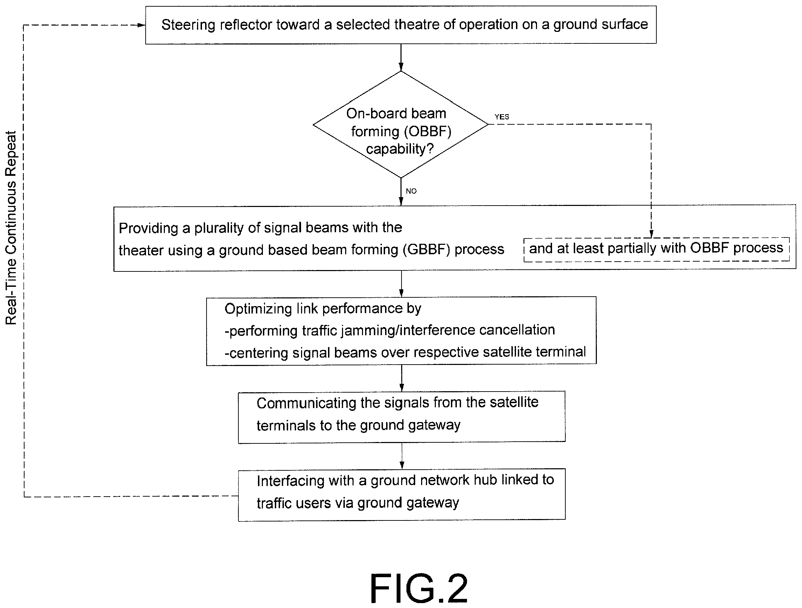

Accordingly, as illustrated in Figure 2, the present invention also refers to a method for optimal tracking of multiple moving broadband satellite terminals 12 in support of in theatre 14 operations and rapid deployment applications. The method comprising the general steps of:
- steering a reflector of an antenna system toward a selected theatre 14 of operation defined on a ground surface;
- providing for a plurality of signal beams 30 substantially adjacent from one another within the theater 14 for tracking at least one electromagnetic signal 28 corresponding to a respective satellite terminal 12 using an agile beam forming technology 34;
- communicating the electromagnetic signal(s) 28 of the signal beams 30 to a ground gateway 38 on the ground surface via a signal feeder link assembly 36 connected to a feed array 22 of the antenna system 20.

Also, the present invention provides for a method of flexibly forming, allocating and steering the signal beams within the theatre coverage according to, but not limited to, the following operating parameters:
- plurality of satellite terminal requests for connections;
- the near real-time location of the satellite terminals;
- the amount of bandwidth allocated;
- type of carrier access scheme, whether TDMA, FDMA, CDMA or some combination thereof;
- type of networking connection, whether star or mesh; and
- the duration of the connections.

## Claims

1. An architecture (10) for optimal tracking of multiples moving broadband satellite terminals (12) in a theatre area (14) any in support of rapid deployment applications, said architecture (10) **being characterized by** a combination of:
- a spacecraft antenna system (20) having a feed array (22) fixedly mounted on an antenna structure (24) and operably connected to a reflector (26) steerably mounted on the antenna structure (24) for transmitting and receiving at least one electromagnetic signal (28) to and from the theatre area (14) of operation defined on a ground surface, the feed array (22) generating a plurality of signal beams (30) within the theater area (14) for a tracking of said at least one electromagnetic signal (28) corresponding to a respective satellite terminal (12); and
- a signal feeder link assembly (36) connected to the feed array (22) for communication of said at least one electromagnetic signal (28) of said signal beams (30) to a ground gateway (38) located outside of the theater area (14).

2. The architecture (10) of claim 1, **characterized in that** the plurality of signal beams (30) are generated using an agile beam forming technology (34).

3. The architecture (10) of any one of claims 1 and 2, **characterized in that** the feed array (22) includes a plurality of feeds (32) producing the plurality of signal beams (30), with each said signal beam (30) tracking a corresponding one of said at least one electromagnetic signal (28) corresponding to a respective satellite terminal (12).

4. The architecture (10) of any one of claims 1 to 3, **characterized in that** the plurality of signal beams (30) are substantially adjacent from one another within the theater area (14).

5. The architecture (10) of claim 2, **characterized in that** at least one said plurality of signal beams (30) is centered over said at least one electromagnetic signal (28) corresponding said respective satellite terminal (12) being tracked.

6. The architecture (10) of claim 2, **characterized in that** said plurality of signal beams (30) are optimized for a link performance providing for cancellation of jamming /interference around the at least one electromagnetic signal (28) corresponding to said respective satellite terminal (12) being tracked.

7. The architecture (10) of any one of claims 1 to 6, **characterized in that** said ground gateway (38) is movable on the ground surface.

8. A spacecraft (11) being **characterized by** having an architecture (10) as defined in any one of claims 1 to 7.

9. A method for optimal tracking of multiple moving broadband satellite terminals (12) in a in upport of theatre area (14) and in support of rapid deployment applications, said method **being characterized by** the steps of:
- steering a reflector (26) of an antenna system (20) mountable on a spacecraft (11) toward a selected theatre area (14) of operation defined on a ground surface;
- generating by a fixed feed array (22) of the antenna system (20), which is operably connected to the reflector (26), a plurality of signal beams (30) within the theater area (14) for tracking at least one electromagnetic signal (28) corresponding to a respective satellite terminal (12); and
- communicating said at least one electromagnetic signal (28) of the signal beams (30) to a ground gateway (38) located outside of the theater area (14) via a signal feeder link assembly (36) connected to said fixed feed array (22).

10. The method of claim 9, **characterized in that** the step of generating a plurality of signal beams (30) includes generating said plurality of signal beams (30) using an agile beam forming technology (34).

11. The method of claim 10, **characterized in that** the step of generating said plurality of signal beams (30) using an agile beam forming technology (34) includes generating said plurality of signal beams (30) using a ground based beam forming (42) process.

12. The method of claim 11, **characterized in that** the step of generating said plurality of signal beams (30) includes optimizing a link performance of each of said plurality of signal beams (30) for the tracking of said at least one electromagnetic signal (28) corresponding to a respective satellite terminal (12).

13. The method of claim 12, **characterized in that** the step of optimizing a link performance includes performing a cancellation of jamming /interference around the at least one electromagnetic signal (28) corresponding to said respective satellite terminal (12) being tracked.

14. The method of claim 12, **characterized in that** the step of optimizing a link performance includes centering at least one said plurality of signal beams (30) over said at least one electromagnetic signal (28) corresponding to said respective satellite terminal (12) being tracked.

15. The method of any one of claims 11 to 14, **characterized in that** the step of generating said plurality of signal beams (30) using an agile beam forming technology (34) further includes transmitting said signal beams (30) to the antenna system (20) via the signal feeder link assembly (36).

16. The method of any one of claims 10 to 15, **characterized in that** the step of generating said plurality of signal beams (30) using an agile beam forming technology (34) includes allocating at least one said signal beam (30) to a respective satellite terminal (12).

17. The method of any one of claims 9 to 16, further including the step of interfacing with a ground network hub linked to at least one traffic user via the ground gateway (38) so as to transfer a corresponding said at least one electromagnetic signal (28) therewith.

18. The method of any one of claims 11 to 17, **characterized in that** the step of generating said plurality of signal beams (30) using an agile beam forming technology (34) further includes generating said plurality of signal beams (30) at least partially using an on-board beam forming (44) process.

## Patentansprüche

1. Architektur (10) zur optimalen Verfolgung mehrerer bewegter Breitband-Satellitenendgeräte (12) in einem Schauplatzgebiet (14) und mit Unterstützung von Anwendungen mit schnellem Bereichsaufbau, wobei die Architektur (10) **gekennzeichnet ist durch** eine Kombination von:
- einer Raumflugkörper-Antennenanlage (20) mit einem Speisearray (22), das auf einer Antennenkonstruktion (24) ortsfest befestigt ist und mit einem auf der Antennenkonstruktion (24) steuerbar befestigten Reflektor (26) operativ verbunden ist, zum Senden und Empfangen zumindest eines elektromagnetischen Signals (28) in das bzw. aus dem Schauplatzgebiet (14) des auf einer Bodenoberfläche definierten Betriebs, wobei das Speisearray (22) eine Vielzahl von Peilstrahlen (30) in dem Schauplatzgebiet (14) zur Verfolgung des zumindest einen elektromagnetischen Signals (28) erzeugt, das jeweils einem Satellitenendgerät (12) entspricht; und
- eine an das Speisearray (22) angeschlossene Signal-Zubringer-Anordnung (36) zum Kommunizieren des zumindest einen elektromagnetischen Signals (28) der Peilstrahlen (30) an ein außerhalb des Schauplatzgebiets (14) befindliches Boden-Gateway (38).

2. Architektur (10) nach Anspruch 1, **dadurch gekennzeichnet, dass** die Vielzahl von Peilstrahlen (30) unter Verwendung einer Technik des agilen Beamforming erzeugt werden.

3. Architektur (10) nach einem der Ansprüche 1 und 2, **dadurch gekennzeichnet, dass** das Speisearray (22) eine Vielzahl von Einspeisungen (32) beinhaltet, die die Vielzahl von Peilstrahlen (30) erzeugen, wobei jeder Peilstrahl (30) ein korrespondierendes Signal von besagtem zumindest einen elektromagnetischen Signal (28), das jeweils einem Satellitenendgerät (12) entspricht, verfolgt.

4. Architektur (10) nach einem der Ansprüche 1 bis 3, **dadurch gekennzeichnet, dass** die Vielzahl von Peilstrahlen (30) in dem Schauplatzgebiet (14) zueinander im Wesentlichen benachbart liegen.

5. Architektur (10) nach Anspruch 2, **dadurch gekennzeichnet, dass** zumindest einer der Vielzahl von Peilstrahlen (30) auf besagtes zumindest eine elektromagnetische Signal (28), das jeweils dem verfolgten Satellitenendgerät (12) entspricht, zentriert ist.

6. Architektur (10) nach Anspruch 2, **dadurch gekennzeichnet, dass** die Vielzahl von Peilstrahlen (30) für eine Betriebsleistung der Zubringer optimiert ist, die eine Aufhebung von Störungen/Interferenzen um das zumindest eine elektromagnetische Signal (28), das jeweils dem verfolgten Satellitenendgerät (12) entspricht, erbringt.

7. Architektur (10) nach einem der Ansprüche 1 bis 6, **dadurch gekennzeichnet, dass** das Boden-Gateway (38) auf der Bodenoberfläche bewegbar ist.

8. Raumflugkörper (11) **gekennzeichnet durch** eine Architektur (10) gemäß einem der Ansprüche 1 bis 7.

9. Verfahren zur optimalen Verfolgung mehrerer bewegter Breitband-Satellitenendgeräte (12) in einem Schauplatzgebiet (14) und mit Unterstützung von Anwendungen mit schnellem Bereichsaufbau, wobei das Verfahren **gekennzeichnet ist durch** die Schritte:
- Steuern eines Reflektors (26) einer auf einem Raumflugkörper (11) montierbaren Antennenanlage (20) hin zu einem ausgewählten, auf einer Bodenoberfläche definierten Betriebs-Schauplatzgebiet (14);
- Erzeugen einer Vielzahl von Peilstrahlen (30) in dem Schauplatzgebiet (14) zur Verfolgung zumindest eines elektromagnetischen Signals (28), das jeweils einem Satellitenendgerät (12) entspricht, mit einem ortsfesten Speisearray (22) der Antennenanlage (20), das mit dem Reflektor (26) operativ verbunden ist; und
- Kommunizieren des zumindest einen elektromagnetischen Signals (28) der Peilstrahlen (30) an ein außerhalb des Schauplatzgebiets (14) befindliches Boden-Gateway (38) über eine an das ortsfeste Speisearray (22) angeschlossene Signal-Zubringeranordnung (36).

10. Verfahren nach Anspruch 9, **dadurch gekennzeichnet, dass** der Schritt des Erzeugens einer Vielzahl von Peilstrahlen (30) Erzeugen der Vielzahl von Peilstrahlen (30) mithilfe einer Technik des agilen Beamforming beinhaltet.

11. Verfahren nach Anspruch 10, **dadurch gekennzeichnet, dass** der Schritt des Erzeugens der Vielzahl von Peilstrahlen (30) mithilfe einer Technik des agilen Beamforming Erzeugen der Vielzahl von Peilstrahlen (30) mittels eines bodengebundenen Prozesses des Beamforming (42) beinhaltet.

12. Verfahren nach Anspruch 11, **dadurch gekennzeichnet, dass** der Schritt des Erzeugens der Vielzahl von Peilstrahlen (30) Optimieren einer Zubringer-Betriebsleistung jedes der Vielzahl von Peilstrahlen (30) zum Verfolgen des zumindest eine elektromagnetischen Signals (28), das jeweils einem Satellitenendgerät (12) entspricht, beinhaltet.

13. Verfahren nach Anspruch 12, **dadurch gekennzeichnet, dass** der Schritt des Optimierens einer Zubringer-Betriebsleistung Durchführen einer Aufhebung von Störungen/Interferenzen um das zumindest eine elektromagnetische Signal (28), das jeweils dem verfolgten Satellitenendgerät (12) entspricht, beinhaltet.

14. Verfahren nach Anspruch 12, **dadurch gekennzeichnet, dass** der Schritt des Optimierens der Zubringer-Betriebsleistung Zentrieren von zumindest einem der Vielzahl von Peilstrahlen (30) auf das zumindest eine elektromagnetische Signal (28), das jeweils dem verfolgten Satellitenendgerät (12) entspricht, beinhaltet.

15. Verfahren nach einem der Ansprüche 11 bis 14, **dadurch gekennzeichnet, dass** der Schritt des Erzeugens der Vielzahl von Peilstrahlen (30) mithilfe einer Technik des agilen Beamforming zudem Senden der Peilstrahlen (30) an die Antennenanlage (20) über die Signal-Zubringer-Anordnung (36) beinhaltet.

16. Verfahren nach einem der Ansprüche 10 bis 15, **dadurch gekennzeichnet, dass** der Schritt des Erzeugens der Vielzahl von Peilstrahlen (30) mithilfe einer Technik des agilen Beamforming Zuteilen zumindest eines der Peilstrahlen (30) zu jeweils einem Satellitenendgerät (12) beinhaltet.

17. Verfahren nach einem der Ansprüche 9 bis 16, zusätzlich umfassend den Schritt des Verbindens über eine Schnittstelle mit einem Netzwerkknoten am Boden, der mit zumindest einem Verkehrsnutzer über das Boden-Gateway (38) verbunden ist, um darüber ein korrespondierendes Signal von besagtem zumindest einen elektromagnetischen Signal (28) zu übertragen.

18. Verfahren nach einem der Ansprüche 11 bis 17, **dadurch gekennzeichnet, dass** der Schritt des Erzeugens der Vielzahl von Peilstrahlen (30) mithilfe einer Technik des agilen Beamforming zudem Erzeugen der Vielzahl von Peilstrahlen (30) zumindest zum Teil mittels eines bordeigenen Prozesses des Beamforming (44) beinhaltet.

## Revendications

1. - Architecture (10) pour un suivi optimal de multiples terminaux satellites à large bande en mouvement (12) dans une zone de théâtre (14) et en soutien d'applications à déploiement rapide, ladite architecture (10) **étant caractérisée par** une combinaison :
- d'un système d'antenne (20) d'un astronef ayant un réseau d'alimentation (22) monté de manière fixe sur une structure d'antenne (24) et connecté de manière fonctionnelle à un réflecteur (26) monté de manière orientable sur la structure d'antenne (24) pour émettre et recevoir au moins un signal électromagnétique (28) vers et depuis la zone de théâtre (14) de fonctionnement définie sur une surface terrestre, le réseau d'alimentation (22) générant une pluralité de faisceaux de signaux (30) à l'intérieur de la zone de théâtre (14) pour un suivi dudit au moins un signal électromagnétique (28) correspondant à un terminal satellite respectif (12) ; et
- d'un ensemble liaison de dispositif d'alimentation de signaux (36) connecté au réseau d'alimentation (22) pour une communication dudit au moins un signal électromagnétique (28) desdits faisceaux de signaux (30) à une passerelle terrestre (38) située à l'extérieur de la zone de théâtre (14).

2. - Architecture (10) selon la revendication 1, **caractérisée par le fait que** la pluralité de faisceaux de signaux (30) sont générés à l'aide d'une technologie de formation de faisceau agile (34).

3. - Architecture (10) selon l'une quelconque des revendications 1 et 2, **caractérisée par le fait que** le réseau d'alimentation (22) comprend une pluralité d'alimentations (32) produisant la pluralité de faisceaux de signaux (30), chaque faisceau de signaux précité (30) suivant l'un correspondant dudit au moins un signal électromagnétique (28) correspondant à un terminal satellite respectif (12).

4. - Architecture (10) selon l'une quelconque des revendications 1 à 3, **caractérisée par le fait que** la pluralité de faisceaux de signaux (30) sont sensiblement adjacents les uns aux autres à l'intérieur de la zone de théâtre (14).

5. - Architecture (10) selon la revendication 2, **caractérisée par le fait qu'**au moins l'un de ladite pluralité de faisceaux de signaux (30) est centré sur ledit au moins un signal électromagnétique (28) correspondant audit terminal satellite respectif (12) qui est suivi.

6. - Architecture (10) selon la revendication 2, **caractérisée par le fait que** ladite pluralité de faisceaux de signaux (30) sont optimisés pour une performance de liaison permettant une annulation de brouillage/interférence autour de l'au moins un signal électromagnétique (28) correspondant audit terminal satellite respectif (12) qui est suivi.

7. - Architecture (10) selon l'une quelconque des revendications 1 à 6, **caractérisée par le fait que** ladite passerelle terrestre (38) est déplaçable sur la surface terrestre.

8. - Astronef (11) qui est **caractérisé par le fait qu'**il possède une architecture (10) telle que définie à l'une quelconque des revendications 1 à 7.

9. - Procédé pour un suivi optimal de multiples terminaux satellites à large bande en mouvement (12) dans une zone de théâtre (14) et en soutien d'applications à déploiement rapide, ledit procédé **étant caractérisé par** les étapes consistant à :
- orienter un réflecteur (26) d'un système d'antenne (20) qui peut être monté sur un astronef (11) vers une zone de théâtre (14) de fonctionnement sélectionnée définie sur une surface terrestre ;
- générer par un réseau d'alimentation fixe (22) du système d'antenne (20), qui est connecté de manière fonctionnelle au réflecteur (26), une pluralité de faisceaux de signaux (30) à l'intérieur de la zone de théâtre (14) pour suivre au moins un signal électromagnétique (28) correspondant à un terminal satellite respectif (12) ; et
- communiquer ledit au moins un signal électromagnétique (28) des faisceaux de signaux (30) à une passerelle terrestre (38) située à l'extérieur de la zone de théâtre (14) par l'intermédiaire d'un ensemble liaison de dispositif d'alimentation de signaux (36) connecté audit réseau d'alimentation fixe (22).

10. - Procédé selon la revendication 9, **caractérisé par le fait que** l'étape consistant à générer une pluralité de faisceaux de signaux (30) comprend la génération de ladite pluralité de faisceaux de signaux (30) à l'aide d'une technologie de formation de faisceau agile (34).

11. - Procédé selon la revendication 10, **caractérisé par le fait que** l'étape consistant à générer ladite pluralité de faisceaux de signaux (30) à l'aide d'une technologie de formation de faisceau agile (34) comprend la génération de ladite pluralité de faisceaux de signaux (30) à l'aide d'un processus de formation de faisceau basé sur terre (42).

12. - Procédé selon la revendication 11, **caractérisé par le fait que** l'étape consistant à générer ladite pluralité de faisceaux de signaux (30) comprend l'optimisation d'une performance de liaison de chacun de ladite pluralité de faisceaux de signaux (30) pour le suivi dudit au moins un signal électromagnétique (28) correspondant à un terminal satellite respectif (12).

13. - Procédé selon la revendication 12, **caractérisé par le fait que** l'étape consistant à optimiser une performance de liaison comprend la réalisation d'une annulation de brouillage/interférence autour de l'au moins un signal électromagnétique (28) correspondant audit terminal satellite respectif (12) qui est suivi.

14. - Procédé selon la revendication 12, **caractérisé par le fait que** l'étape consistant à optimiser une performance de liaison comprend le centrage d'au moins l'un de ladite pluralité de faisceaux de signaux (30) sur ledit au moins un signal électromagnétique (28) correspondant audit terminal satellite respectif (12) qui est suivi.

15. - Procédé selon l'une quelconque des revendications 11 à 14, **caractérisé par le fait que** l'étape consistant à générer ladite pluralité de faisceaux de signaux (30) à l'aide d'une technologie de formation de faisceau agile (34) comprend en outre l'émission desdits faisceaux de signaux (30) au système d'antenne (20) par l'intermédiaire de l'ensemble liaison de dispositif d'alimentation de signaux (36).

16. - Procédé selon l'une quelconque des revendications 10 à 15, **caractérisé par le fait que** l'étape consistant à générer ladite pluralité de faisceaux de signaux (30) à l'aide d'une technologie de formation de faisceau agile (34) comprend l'allocation d'au moins un faisceau de signaux précité (30) à un terminal satellite respectif (12).

17. - Procédé selon l'une quelconque des revendications 9 à 16, comprenant en outre l'étape consistant à s'interfacer avec un concentrateur de réseau terrestre lié à au moins un utilisateur de trafic par l'intermédiaire de la passerelle terrestre (38) afin de transférer ledit au moins un signal électromagnétique (28) correspondant avec celui-ci.

18. - Procédé selon l'une quelconque des revendications 11 à 17, **caractérisé par le fait que** l'étape consistant à générer ladite pluralité de faisceaux de signaux (30) à l'aide d'une technologie de formation de faisceau agile (34) comprend en outre la génération de ladite pluralité de faisceaux de signaux (30) au moins partiellement à l'aide d'un processus de formation de faisceau embarqué (44).
